# EUROPEAN PATENT APPLICATION

(11) **EP 4 741 047 A1**
(43) Date of publication of application: **13.05.2026**
(21) Application number: 23944116.5
(22) Date of filing: 11.08.2023
(51) Int. Cl.: B01D 69/10, B01D 69/02, B01D 67/00

(54) **USE OF TEMPERATURE-SENSITIVE COMPOSITE MATERIAL IN PREPARATION OF SEPARATION MEMBRANE, AND NANOFILTRATION MEMBRANE AND PREPARATION METHOD**

(30) Priority: 05.07.2023 CN 202310822419
(71) Applicant: Beijing Originwater Membrane Technology Co., Ltd., Beijing 101407 (CN)
(72) Inventor: CHEN, Yili, Beijing 101407 (CN); ZHANG, Qinglei, Beijing 101407 (CN); WEN, Jianping, Beijing 101407 (CN); HOU, Qin, Beijing 101407 (CN); LI, Suoding, Beijing 101407 (CN); LU, Yanbin, Beijing 101407 (CN); WANG, Zhen, Beijing 101407 (CN); YANG, Xuexuan, Beijing 101407 (CN)
(74) Representative: Metida
(86) International application number: PCT/CN2023/112760
(87) International publication number: WO 2025/007390

(57) **Abstract**

The present invention provides an application of a thermoresponsive composite material in the preparation of separation membranes, a nanofiltration membrane, and a preparation method therefor, specifically relating to the technical field of separation membranes. The thermoresponsive composite material comprises a thermoresponsive material and a conductive filler, with a mass ratio of the thermoresponsive material to the conductive filler ranging from 10-30: 1-10. Utilizing the rapid temperature response characteristic of the thermoresponsive material and transmitting this property via the conductive filler to the external environment, the present invention enables timely feedback and adjustment of temperature during the preparation process of separation membranes. This facilitates the preparation of isotropic separation membranes, ensures stability in membrane performance, and improves the quality of separation membrane products.

## Description

The present invention claims priority from Chinese Patent Application No. 2023108224194, titled "Application of Thermoresponsive Composite Material in the Preparation of Separation Membranes, Nanofiltration Membrane, and Preparation Method Thereof," filed with China National Intellectual Property Administration (CNIPA) on July 5, 2023, the entire contents of which are incorporated herein by reference.

### Field Of the Invention

The present invention relates to the technical field of separation membranes, and particularly to an application of a thermoresponsive composite material in the preparation of separation membranes, a nanofiltration membrane, and a preparation method therefor.

### Background Art

Against the backdrop of resource recovery and sustainable development, membrane technology exhibits significant potential in eco-friendly applications. Owing to advantages such as low energy consumption, easy operation, and scalability, membrane separation technology has rapidly developed over the past few decades. Among these, organic membranes, characterized by excellent mechanical properties, scalable preparation, and relatively low production costs, dominate the separation membrane market.

Membrane separation technology has been widely applied across various industries, such as in circulating water systems, seawater desalination, purification processes, clean energy production, and gas separation. Among all methods for preparing separation membranes, interfacial polymerization technology is particularly capable of regulating the size and thickness of thin films with ease. Additionally, the synthesized thin films exhibit uniform pore structures, making it advantageous in applications including adsorption, catalysis, and energy storage. The most significant large-scale application of interfacial polymerization technology lies in the preparation of ultra-thin composite membranes, such as those used in nanofiltration, reverse osmosis, and gas separation.

Interfacial polymerization technology refers to a process where two highly reactive monomers are dissolved in two immiscible solvents, respectively, and undergo an irreversible polycondensation reaction at the interface of the two phases. During membrane fabrication, although temperature control measures are implemented at key locations such as the water phase tank and platform area, the temperature control equipment can only regulate the polymerization reaction temperature based on the set temperature within the equipment itself. It cannot accurately capture the actual polymerization temperature of the interfacial polymerization layer. Due to significant temperature fluctuations at the interface caused by factors such as water phase evaporation and external environmental conditions, these temperature changes cannot be precisely fed back to the temperature control equipment. This not only affects desalination efficiency but also compromises performance stability. Additionally, seasonal variations in the actual water/oil phase monomer concentrations on the base membrane surface lead to substantial fluctuations in product performance. The actual temperature during interfacial polymerization influences both the diffusion kinetic rates of the water/oil phases and the initial thermodynamic rates of the reaction, ultimately affecting the crosslinking degree of the polycondensation reaction. Consequently, the permeation flux of the formed interfacial polymerization layer and the impurity rejection rate become uncontrollable.

### Summary of the Invention

The present invention provides an application of a thermoresponsive composite material in the preparation of separation membranes, wherein the thermoresponsive composite material comprises a thermoresponsive material and a conductive filler.

Optionally, the thermoresponsive material and the conductive filler have a mass ratio ranging from 10-30:1-10;
Optionally, the thermoresponsive material comprises at least one of polylactic acid, poly(N-isopropylacrylamide), polystyrene, polyurethane, acrylonitrile-butadiene-styrene copolymer, polycarbonate, polycaprolactone, polyethylene oxide, and polyvinyl chloride;
Optionally, the conductive filler comprises at least one of polyacetylene and its derivatives, polypyrrole and its derivatives, polythiophene and its derivatives, polystyrene and its derivatives, and polyaniline and its derivatives;
Optionally, the conductive filler has a (average) particle size of 5 nm-20 nm;
Optionally, the separation membrane includes microfiltration membranes, ultrafiltration membranes, nanofiltration membranes, reverse osmosis membranes, pervaporation membranes, or ion exchange membranes.

The present invention further provides a nanofiltration membrane, comprising a porous support layer, a thermosensitive modification layer, and an interfacial polymerization layer stacked sequentially;
wherein the thermosensitive modification layer comprises the thermosensitive composite material.

Optionally, the thermosensitive composite material comprises a thermosensitive material and a conductive filler.

Optionally, the mass ratio of the thermosensitive material to the conductive filler ranges from 10-30:1-10.

Optionally, the thermosensitive material comprises at least one of polylactic acid, poly(N-isopropylacrylamide), polystyrene, polyurethane, acrylonitrile-butadiene-styrene copolymer, polycarbonate, polycaprolactone, polyethylene oxide, and polyvinyl chloride.

Optionally, the conductive filler comprises at least one of polyacetylene and its derivatives, polypyrrole and its derivatives, polythiophene and its derivatives, polystyrene and its derivatives, and polyaniline and its derivatives.

Optionally, the (average) particle size of the conductive filler is 5 nm-20 nm.

Optionally, the porous support layer has a thickness of 10 µm-80 µm, an average pore size of 10 nm-100 nm, and a porosity of 20%-70%.

Optionally, the porous support layer has a thickness of 10 µm-50 µm, an average pore size of 10 nm-100 nm, and a porosity of 20%-70%.

Optionally, the thermosensitive modification layer has a thickness of 1 µm-5 µm, an average pore size of 5 nm-50 nm, and a porosity of 10%-50%.

Optionally, the interfacial polymerization layer has a thickness of 10 nm-100 nm, an average pore size of 0.5 nm-2 nm, and a porosity of 10%-50%.

The present invention further provides a preparation method for a nanofiltration membrane, comprising the following steps:
A. Preparing the thermosensitive composite material into a slurry, coating it onto the porous support layer using a slot die quantitative coating process, and drying it in a first oven to obtain a nanofiltration membrane semi-finished product provided with the thermosensitive modification layer on the porous support layer;
B. Coating an aqueous phase solution onto one side surface of the nanofiltration membrane semi-finished product, removing excess aqueous phase solution from the surface using a nitrogen air knife, then coating an oil phase solution onto the surface of the aqueous phase solution, and placing it into a second oven equipped with an infrared temperature probe. The infrared temperature probe is disposed on the thermosensitive modification layer and used to measure the temperature of the surface of the thermosensitive modification layer. After drying, the nanofiltration membrane is obtained.

Optionally, the infrared temperature probe is disposed at least at three points on the width direction of the thermosensitive modification layer: left, middle, and right;

Optionally, in step B, the drying temperature is 30°C-90°C, and the drying time is 40s-120s;

Optionally, in step A, the slurry comprises the following components by mass percentage: thermosensitive composite material 11%-40%, additives 1%-8%, and the balance being solvent;

Optionally, the thermosensitive composite material comprises a thermosensitive material and a conductive filler;

Optionally, the mass ratio of the thermosensitive material to the conductive filler ranges from 10-30:1-10.

Optionally, in step A, the slurry comprises the following components by mass percentage: thermosensitive material 10%-30%, conductive filler 1%-10%, additives 1%-3%, and the balance being solvent;

Optionally, the additives comprise at least one of ketones, alcohols, mixtures of polyvinyl alcohols with different molecular weights, and mixtures of polyvinylpyrrolidone with different molecular weights;

Optionally, the molecular weight of the ketones is 30-98;

Optionally, the ketones comprise at least one of n-propanone, isopropanone, propanone, butanone, and cyclohexanone;

Optionally, the molecular weight of the alcohols is 32-60;

Optionally, the alcohols comprise at least one of methanol, ethanol, isopropanol, and n-propanol;

Optionally, the solvent comprises at least one of dimethylformamide, dimethylacetamide, and dimethyl sulfoxide.

Optionally, in step A, the slurry is prepared by first uniformly dispersing the conductive filler in the solvent, then adding the thermosensitive material and the additives, stirring to achieve uniform mixing, and thereby obtaining the slurry.

Optionally, in step A, in the slot die quantitative coating process, the coating speed is 2 m/min-20 m/min, and the coating amount is 10 mL/min-500 mL/min.

Optionally, in step A, the drying temperature is 40°C-80°C.

### Description Of Drawings

To more clearly illustrate the technical solutions in the specific embodiments of the present invention or the prior art, the drawings required for describing the specific embodiments or the prior art are briefly introduced below. Obviously, the drawings in the following description are some embodiments of the present invention. For those skilled in the art, other drawings can be obtained from these drawings without creative efforts.
FIG. 1 is an SEM image of the surface morphology of the polyethylene microporous membrane used in Example 3;
FIG. 2 is an SEM image of the surface of the nanofiltration membrane semi-finished product obtained in Example 3;
FIG. 3 is an SEM image of the cross-section of the nanofiltration membrane semi-finished product obtained in Example 3;
FIG. 4 is an SEM image of the surface of the nanofiltration membrane obtained in Example 3.

### Detailed Description of the Invention

To make the objectives, technical solutions, and advantages of the present invention clearer, the following describes the technical solutions in the embodiments of the present invention clearly and completely in conjunction with the drawings therein. Obviously, the described embodiments are merely a part of the embodiments of the present invention, rather than all of them.

Hereinafter, the terms "comprising", "having", and their cognate words, as used in various embodiments of the present invention, are intended solely to denote the presence of stated features, numbers, steps, operations, elements, components, or combinations thereof. They should not be construed as, in the first place, excluding the existence of one or more other features, numbers, steps, operations, elements, components, or combinations thereof, nor as precluding the possibility of adding one or more such features, numbers, steps, operations, elements, components, or combinations thereof.

Additionally, the terms "first", "second", "third", etc. are used solely to distinguish descriptions and shall not be construed as indicating or implying relative importance.

One embodiment of the present invention provides an application of a thermosensitive composite material in the preparation of separation membranes, wherein the thermosensitive composite material comprises a thermosensitive material and a conductive filler.

The application of the thermosensitive composite material provided by the present invention in the preparation of separation membranes utilizes the characteristic of the thermosensitive material to rapidly respond to temperature changes. This characteristic is transmitted to the outside via the conductive filler, enabling real-time feedback and adjustment of temperature during the preparation of the separation membrane. This is conducive to preparing an isotropic separation membrane, ensures the stability of the separation membrane's performance, and improves the quality of the separation membrane products.

In some embodiments, the mass ratio of the thermosensitive material to the conductive filler is 10-30:1-10. When the mass ratio of the thermosensitive material to the conductive filler is less than 10:10, the amount of conductive filler increases, reducing the substance responsive to temperature, making it difficult to achieve sensitive temperature sensing; when the mass ratio exceeds 30:1, the thermosensitive material is excessively dosed while the conductive filler is insufficient, failing to accurately and losslessly transmit temperature changes, and thus making precise temperature control difficult.

In some embodiments of the present invention, the mass ratio of the thermosensitive material to the conductive filler is typically but not limited to, for example, 15-25:1-10, 15-25:2-8, or 17-20:3-7, such as 10:1, 10:5, 10:10, 15:1, 15:5, 15:10, 20:1, 20:5, 20:10, 25:1, 25:5, 25:10, 30:1, 30:5, or 30: 10.

Optionally, the thermosensitive material comprises at least one of polylactic acid, poly(N-isopropylacrylamide), polystyrene, polyurethane, acrylonitrile-butadiene-styrene copolymer, polycarbonate, polycaprolactone, polyethylene oxide, and polyvinyl chloride.

Optionally, the conductive filler comprises at least one of polyacetylene and its derivatives, polypyrrole and its derivatives, polythiophene and its derivatives, poly(p-styrene) and its derivatives, and polyaniline and its derivatives.

Optionally, the average particle size of the conductive filler is 5 nm-20 nm. Within the above numerical range, the conductive filler of the present invention facilitates uniform distribution, enabling it to form a conductive network and respond accordingly to changes in external temperature.

In some embodiments of the present invention, the (average) particle size of the conductive filler is typically but not limited to, for example, 7 nm-18 nm, 9 nm-16 nm, or 10 nm-14 nm, such as 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, or 20 nm.

In some embodiments, the separation membrane comprises microfiltration membranes, ultrafiltration membranes, nanofiltration membranes, reverse osmosis membranes, pervaporation membranes, or ion exchange membranes.

In microfiltration membranes, which include a functional skin layer formed via phase inversion, applying the thermosensitive composite material to the microfiltration membrane enables control over the phase inversion rate through the thermosensitive material, thereby achieving the preparation of functional layers with different pore sizes.

In ultrafiltration membranes, which include a functional skin layer formed via phase inversion, applying the thermosensitive composite material to the ultrafiltration membrane enables control over the phase inversion rate through the thermosensitive material, thereby achieving the preparation of functional layers with different pore sizes.

In nanofiltration membranes, which comprise a polyamide separation layer formed via interfacial polymerization, applying the thermosensitive composite material to the nanofiltration membrane enables control over the crosslinking degree of the polyamide separation layer through the thermosensitive composite material, thereby achieving the preparation of nanofiltration membranes with different separation efficiencies.

In reverse osmosis membranes, which comprise a polyamide separation layer formed via interfacial polymerization, applying the thermosensitive composite material to the reverse osmosis membrane enables control over the crosslinking degree of the polyamide separation layer through the thermosensitive composite material, thereby achieving the preparation of reverse osmosis membranes with different salt rejection rates.

In pervaporation membranes, which include a functional skin layer formed via phase inversion, applying the thermosensitive composite material to the pervaporation membrane enables control over the phase inversion rate through the thermosensitive material, thereby improving the uniformity of the pervaporation membranes.

In ion exchange membranes, which include a functional layer formed via slurry coating polymerization, applying the thermosensitive composite material to the ion exchange membrane enables control over the polymerization rate through the thermosensitive material, thereby improving the uniformity of the ion exchange membranes.

One embodiment of the present invention further provides a nanofiltration membrane, comprising a porous support layer, a thermosensitive modification layer, and an interfacial polymerization layer stacked sequentially;
wherein the thermosensitive modification layer comprises the thermosensitive composite material.

The nanofiltration membrane provided by the present invention is primarily composed of a porous support layer, a thermosensitive modification layer, and an interfacial polymerization layer. The thermosensitive modification layer imparts excellent hydrophilicity, enhancing the membrane's permeability. It also effectively "anchors" the porous support layer to the interfacial polymerization layer, strengthening the binding force between them. This resolves the critical issue of nanofiltration membranes being unable to withstand backflushing and prolongs their service life. Meanwhile, the thermosensitive modification layer provides timely temperature feedback, improving the controllability of interfacial polymerization. This facilitates the preparation of nanofiltration membranes with uniform performance, isotropy, and superior stability. Furthermore, during production, temperature control enables the fabrication of interfacial polymerization layers with varying degrees of polymerization. When combined with different porous support layers and thermosensitive modification layers, these structures produce nanofiltration membranes of diverse specifications-achieving product diversification, meeting the needs of varied application scenarios, and driving the growth of the nanofiltration membrane industry.

In some embodiments of the present invention, the material of the porous support layer is typically but not limited to at least one of cellulose acetate (CA), polyvinylidene fluoride (PVDF), polysulfone (PSf), polyacrylonitrile (PAN), polypropylene (PP), and polyethylene (PE). Polyethylene, as the support layer material, forms a polyethylene-based substrate, which exhibits uniform pores, high surface porosity, excellent solvent resistance and mechanical properties.

The porous support layer is an important component of the nanofiltration membrane, serving to provide transport channels for water and solutes. Moreover, the surface structure (pore size, porosity, roughness, etc.) and physicochemical properties (surface hydrophilicity or hydrophobicity, surface charge, etc.) of the support layer affect the formation process of the interfacial polymerization layer, thereby influencing the performance of the membrane.

Optionally, the porous support layer has a thickness of 10 µm-80 µm, an average pore size of 10 nm-100 nm, and a porosity of 20%-70%. Optionally, the porous support layer has a thickness of 10 µm-50 µm, an average pore size of 10 nm-100 nm, and a porosity of 20%-70%. For example, the porous support layer has a thickness of 10 µm-30 µm, an average pore size of 30 nm-50 nm, and a porosity of 30%-50%. For example, the porous support layer has a thickness of 10 µm-30 µm, an average pore size of 50 nm-100 nm, and a porosity of 50%-70%. For example, the porous support layer has a thickness of 50 µm-80 µm, an average pore size of 10 nm-20 nm, and a porosity of 20%-40%.

Optionally, the thermosensitive modification layer has a thickness of 1 µm-5 µm, an average pore size of 5 nm-50 nm, and a porosity of 10%-50%. For example, the thermosensitive modification layer has a thickness of 1 µm-2 µm, an average pore size of 30 nm-50 nm, and a porosity of 30%-50%. For example, the thermosensitive modification layer has a thickness of 1 µm-2 µm, an average pore size of 20 nm-40 nm, and a porosity of 20%-40%.

Optionally, the interfacial polymerization layer has a thickness of 10 nm-100 nm, an average pore size of 0.5 nm-2 nm, and a porosity of 10%-50%. For example, the interfacial polymerization layer has a thickness of 10 nm-30 nm, an average pore size of 0.8 nm-1.5 nm, and a porosity of 30%-50%. For example, the interfacial polymerization layer has a thickness of 10 nm-30 nm, an average pore size of 0.5 nm-1.2 nm, and a porosity of 30%-50%. For example, the interfacial polymerization layer has a thickness of 30 nm-50 nm, an average pore size of 0.5 nm-1.0 nm, and a porosity of 20%-40%. For example, the interfacial polymerization layer has a thickness of 50 nm-80 nm, an average pore size of 0.5 nm-1.0nm, and a porosity of 20%-40%.

In some embodiments of the present invention, in the nanofiltration membrane: the porous support layer has a thickness of 10 µm-30 µm, an average pore size of 50 nm-100 nm, and a porosity of 50%-70%; the thermosensitive modification layer has a thickness of 1 µm-2 µm, an average pore size of 30 nm-50 nm, and a porosity of 30%-50%; the interfacial polymerization layer has a thickness of 10 nm-30 nm, an average pore size of 0.8 nm-1.5 nm, and a porosity of 30%-50%. This nanofiltration membrane exhibits excellent permeability and is suitable for application in seawater/brackish water desalination pretreatment.

In some other embodiments of the present invention, in the nanofiltration membrane: the porous support layer has a thickness of 10 µm-30 µm, an average pore size of 30 nm-50 nm, and a porosity of 30%-50%; the thermosensitive modification layer has a thickness of 1 µm-2 µm, an average pore size of 30 nm-50 nm, and a porosity of 30%-50%; the interfacial polymerization layer has a thickness of 10 nm-30 nm, an average pore size of 0.5 nm-1.2 nm, and a porosity of 30%-50%. This nanofiltration membrane exhibits excellent permeability and a higher hardness removal rate, making it suitable for application in groundwater softening.

In some other embodiments of the present invention, in the nanofiltration membrane: the porous support layer has a thickness of 30 µm-50 µm, an average pore size of 10 nm-30 nm, and a porosity of 20%-40%; the thermosensitive modification layer has a thickness of 1 µm-2 µm, an average pore size of 30 nm-50 nm, and a porosity of 30%-50%; the interfacial polymerization layer has a thickness of 30 nm-50 nm, an average pore size of 0.5 nm-1.0 nm, and a porosity of 20%-40%. This nanofiltration membrane features a relatively thick desalination layer and smaller pore size, making it suitable for application in textile dye wastewater decolorization.

In some other embodiments of the present invention, in the nanofiltration membrane: the porous support layer has a thickness of 50 µm-80 µm, an average pore size of 10 nm-20 nm, and a porosity of 20%-40%; the thermosensitive modification layer has a thickness of 1 µm-2 µm, an average pore size of 20 nm-40 nm, and a porosity of 20%-40%; the interfacial polymerization layer has a thickness of 50 nm-80 nm, an average pore size of 0.5 nm-1.0 nm, and a porosity of 20%-40%. This nanofiltration membrane features a thick desalination layer and high multi-valent ion rejection capability, making it suitable for high-pressure operating environments such as lithium extraction from salt lakes and industrial zero liquid discharge (ZLD).

One embodiment of the present invention further provides a preparation method for a nanofiltration membrane, comprising the following steps:
A. Preparing the thermosensitive composite material into a slurry, coating it onto the porous support layer using a slot die quantitative coating process, and drying it in a first oven to obtain a nanofiltration membrane semi-finished product provided with the thermosensitive modification layer on the porous support layer;
B. Coating an aqueous phase solution onto one side surface of the nanofiltration membrane semi-finished product, removing excess aqueous phase solution from the surface using a nitrogen air knife, then coating an oil phase solution onto the surface of the aqueous phase solution, and placing it into a second oven equipped with an infrared temperature probe. The infrared temperature probe is disposed on the thermosensitive modification layer and used to measure the temperature of the surface of the thermosensitive modification layer. After drying, the nanofiltration membrane is obtained.

The preparation method for the nanofiltration membrane provided by the present invention features a simple process, high degree of mechanization, large batch processing capacity, and is suitable for industrial production.

The slot die quantitative coating process involves feeding slurry with a specified flow rate into the internal cavity of the die head through the feeding port of the extruder head, generating stable pressure within the system. The slurry is then evenly sprayed out from the slit outlet of the die head and coated onto the porous support layer.

In some embodiments, the preparation process of the aqueous phase solution is as follows: sequentially adding 1 wt.%-2 wt.% piperazine and 2.2 wt.%-2.5 wt.% camphorsulfonic acid, and 0.02 wt.%-0.05 wt.% polyvinyl alcohol (pre-heated and stirred at 70°C-80°C to dissolve) to deionized water. The mixture is then stirred at 35°C-45°C for 1-2 hours, allowed to stand for 1-2 hours, and finally yields the aqueous phase solution.

In some embodiments, the preparation process of the oil phase solution is as follows: adding 0.1 wt.%-1.0 wt.% trimesoyl chloride to n-hexane (pure solvent), stirring magnetically for 1 hour at room temperature, allowing to stand for 1 hour, and yielding the oil phase solution.

In some embodiments, the infrared temperature probe(s) are disposed at least at three points on the width direction of the thermosensitive modification layer: left, middle, and right. When the width of the nanofiltration membrane product is less than 0.5 m, to ensure uniform polymerization degree across all directions, at least three infrared temperature probes are evenly spaced along the width direction. When the width of the nanofiltration membrane product exceeds 0.5 m, to ensure uniform polymerization degree across all directions, at least five infrared temperature probes are evenly spaced along the width direction.

Optionally, in step B, the drying temperature is 30°C-90°C, and the drying time is 40s-120s. It should be noted that the drying temperature here refers to the temperature of the interfacial polymerization reaction, and the temperature set in the second oven may be higher than this temperature.

In some embodiments of the present invention, the drying temperature is typically but not limitatively 30°C, 40°C, 50°C, 60°C, 70°C, 80°C, or 90°C; the drying time is 40s, 50s, 60s, 70s, 80s, 90s, 100s, 110s, or 120s.

In some embodiments, in step A, the slurry comprises the following components by mass percentage: thermosensitive material 10%-30%, conductive filler 1%-10%, additives 1%-3%, and the balance being solvent.

In some embodiments of the present invention, the mass percentage of the thermosensitive material in the slurry is typically but not limitatively 10%, 15%, 20%, 25%, or 30%; the mass percentage of the conductive filler is typically but not limitatively 1%, 3%, 5%, 8%, or 10%; the mass percentage of the additives is typically but not limitatively 1%, 2%, or 3%, and the balance being solvent.

Optionally, the additives comprise at least one of ketones, alcohols, mixtures of polyvinyl alcohols with different molecular weights, and mixtures of polyvinylpyrrolidone with different molecular weights.

The additives used in the present invention are hydrophilic substances distributed on the surface of the thermosensitive modification layer, providing anchors for the bonding of the interfacial polymerization layer. These additives undergo crosslinking and solidification simultaneously with the aqueous phase and oil phase in the interfacial polymerization layer, thereby enhancing the mechanical strength, durability, and permselectivity of the nanofiltration membrane.

Optionally, the ketones have a molecular weight of 30-98;
Optionally, the ketones include at least one of n-propanone, isopropanone, acetone, butanone, and cyclohexanone;
Optionally, the alcohols have a molecular weight of 32-60;
Optionally, the alcohols include at least one of methanol, ethanol, isopropanol, and n-propanol.

Optionally, the solvent comprises at least one of dimethylformamide, dimethylacetamide, and dimethyl sulfoxide.

In some embodiments, in step A, the preparation method of the slurry comprises first uniformly dispersing the conductive filler in the solvent, then adding the thermosensitive material and the additives and stirring uniformly to obtain the slurry.

In some embodiments, in step A, during the slot die quantitative coating process, the coating speed is 2 m/min-20 m/min, and the coating volume is 10 mL/min-500 mL/min.

The coating speed affects the compactness and production efficiency of the thermosensitive modification layer. In actual production, the coating speed and coating volume are selected based on the thickness, average pore size, and porosity of the thermosensitive modification layer. In some embodiments of the present invention, the coating speed is typically but not limitatively 2 m/min, 6 m/min, 10 m/min, 14 m/min, 18 m/min, or 20 m/min; the coating volume is typically but not limitatively 10 mL/min, 50 mL/min, 100 mL/min, 200 mL/min, 300 mL/min, 400 mL/min, or 500 mL/min.

Optionally, in step A, the drying temperature is 40°C-80°C.

In some embodiments of the present invention, the drying temperature is typically but not limitatively 40°C, 50°C, 60°C, 70°C, or 80°C.

The present invention provides an application of the thermosensitive composite material in the preparation of separation membranes, thereby solving the technical problem in the prior art where the uncontrollable temperature during interfacial polymerization leads to uncontrollable performance of separation membrane products.

The application of the thermosensitive composite material provided by the present invention in the preparation of separation membranes utilizes the thermosensitive material's rapid response characteristic to temperature changes. By transmitting this response to the external environment via the conductive filler, it achieves real-time feedback and adjustment of temperature during the separation membrane preparation process. This facilitates the fabrication of isotropic separation membranes, ensures stable performance of the separation membrane, and enhances the quality of the separation membrane products.

The nanofiltration membrane provided by the present invention is primarily composed of a porous support layer, a thermosensitive modification layer, and an interfacial polymerization layer. The thermosensitive modification layer not only imparts excellent hydrophilicity to enhance the membrane's permeability but also "anchors" the porous support layer to the interfacial polymerization layer, significantly strengthening their binding force. This addresses the critical issue of nanofiltration membranes being unable to withstand backflushing and prolongs their service life.

Meanwhile, the thermosensitive modification layer provides timely temperature feedback, improving the controllability of interfacial polymerization. This facilitates the fabrication of nanofiltration membranes with uniform performance, isotropy, and superior stability. Furthermore, during production, temperature control enables the preparation of interfacial polymerization layers with varying degrees of polymerization. When combined with different porous support layers and thermosensitive modification layers, these structures yield nanofiltration membranes of diverse specifications-achieving product diversification, meeting the needs of varied application scenarios, and driving the growth of the nanofiltration membrane industry.

The preparation method for the nanofiltration membrane provided by the present invention features a simple process, high degree of mechanization, large batch processing capacity, and is suitable for industrial production.

The present invention is further illustrated below through specific embodiments and comparative examples. However, it should be understood that these embodiments are merely for more detailed illustration and should not be construed as limiting the present invention in any form. For raw materials used in the embodiments and comparative examples of the present invention, those not specified with specific conditions are conducted under conventional conditions or conditions recommended by the manufacturer. Reagents or instruments not specified with manufacturers are all conventional products available for purchase on the market.

### Example 1

This example provides a nanofiltration membrane, with the preparation method comprising the following steps:
1. Disperse polypyrrole (Sigma, 30604-81-0) in N,N-dimethylformamide (DMF), ultrasonically treat at 70°C for 30 min to obtain a polypyrrole solution. Then, add polylactic acid (BASF, PLA130), polyvinylpyrrolidone (K30), and isopropanol to the polypyrrole solution, stir at 70°C for 120 min to obtain a slurry. In this slurry, the content of polypyrrole is 1 wt.%, polylactic acid is 10 wt.%, polyvinylpyrrolidone is 1 wt.%, and isopropanol is 5 wt.%.
2. Coat the slurry obtained in Step 1 onto a polyethylene microporous membrane (Jiangsu Housheng New Energy Technology Co., Ltd., 0.2 µm) using the slot die quantitative coating process, with a coating speed of 5 m/min, a coating volume of 100 mL/min, and a drying temperature of 60°C. A nanofiltration membrane semi-finished product is then obtained via solvent evaporation phase inversion.
3. Prepare a 10 g/L piperazine aqueous solution as the aqueous phase solution and a 2 g/L trimesoyl chloride solution in ParG (a mixed alkane solvent) as the oil phase solution. Immersion-coat the aqueous phase solution onto the nanofiltration membrane semi-finished product (immersion time: 10-30 s), then remove excess aqueous phase using a nitrogen air knife. Next, coat the oil phase solution onto the surface and transfer the membrane to the second oven equipped with an infrared temperature probe (OPTRIS S11-5, Germany; detection range: 10°C-100°C; accuracy: ±1°C). Install 3 infrared temperature probes at the left, middle, and right points along the membrane's width direction. Adjust the second oven's temperature to maintain the probe-detected temperature at 40°C for 100 s, yielding the nanofiltration membrane.

### Example 2

This example provides a nanofiltration membrane, differing from Example 1 in that the content of polypyrrole in the slurry of Step 1 is 2 wt.%. The remaining raw materials and methods are identical to those in Example 1, which are not repeated here.

### Example 3

This example provides a nanofiltration membrane, differing from Example 1 in that the content of polypyrrole in the slurry of Step 1 is 5 wt.%. The remaining raw materials and methods are identical to those in Example 1, which are not repeated here.

### Example 4

This example provides a nanofiltration membrane, differing from Example 1 in that the content of polypyrrole in the slurry of Step 1 is 10 wt.%. The remaining raw materials and methods are identical to those in Example 1, which are not repeated here.

### Example 5

This example provides a nanofiltration membrane, differing from Example 3 in that, in Step 2, the coating volume is 50 mL/min and the drying temperature is 60°C. The remaining raw materials and steps are identical to those in Example 3, which are not repeated here.

### Example 6

This example provides a nanofiltration membrane, differing from Example 3 in that, in Step 2, the coating volume is 200 mL/min and the drying temperature is 60°C. The remaining raw materials and steps are identical to those in Example 3, which are not repeated here.

### Example 7

This example provides a nanofiltration membrane, differing from Example 3 in that, in Step 2, the coating volume is 100 mL/min and the drying temperature is 40°C. The remaining raw materials and steps are identical to those in Example 3, which are not repeated here.

### Example 8

This example provides a nanofiltration membrane, differing from Example 3 in that, in Step 3, the temperature detected by the infrared temperature probe is controlled at 50°C. The remaining raw materials and steps are identical to those in Example 3, which are not repeated here.

### Example 9

This example provides a nanofiltration membrane, differing from Example 3 in that, in Step 3, the temperature detected by the infrared temperature probe is controlled at 60°C. The remaining raw materials and steps are identical to those in Example 3, which are not repeated here.

### Example 10

This example provides a nanofiltration membrane, differing from Example 3 in that, in Step 3, the temperature detected by the infrared temperature probe is controlled at 70°C. The remaining raw materials and steps are identical to those in Example 3, which are not repeated here.

### Example 11

This example provides a nanofiltration membrane, differing from Example 3 in that, in Step 3, the temperature detected by the infrared temperature probe is controlled at 80°C. The remaining raw materials and steps are identical to those in Example 3, which are not repeated here.

### Example 12

This example provides a nanofiltration membrane, differing from Example 3 in that, in Step 3, the reaction temperature is directly controlled via the second oven, and the infrared temperature probe is omitted. The remaining raw materials and steps are identical to those in Example 3, which are not repeated here.

### Example 13

This example provides a nanofiltration membrane, differing from Example 3 in that, in Step 3, the reaction temperature is directly controlled by the second oven, and one infrared temperature probe is installed at the midpoint along the membrane's width direction. The remaining raw materials and steps are identical to those in Example 3, which are not repeated here.

### Comparative Example 1

This comparative example provides a nanofiltration membrane. Prepare a 10 g/L piperazine aqueous solution as the aqueous phase solution and a 2 g/L trimesoyl chloride solution in n-hexane as the oil phase solution. Coat the aqueous phase solution onto the nanofiltration membrane semi-finished product, remove excess aqueous phase using a nitrogen air knife, then coat the oil phase solution onto the surface, transfer to an oven, and maintain at 40°C for 100 s to yield the nanofiltration membrane.

### Comparative Example 2

This comparative example provides a nanofiltration membrane, differing from Comparative Example 1 in that the oven temperature is maintained at 60°C for 100 s. The remaining raw materials and methods are identical to those in Comparative Example 1, which are not repeated here.

### Test Example 1

Physical performance tests were conducted on the nanofiltration membranes provided by Examples 1-13 and Comparative Examples 1-2, including tests for nanofiltration membrane thickness, average pore size, and porosity. The results are shown in Table 1 below.

**Table 1: Physical Parameters of Nanofiltration Membrane**

| | Thickness µm | Average Pore Size µm | Porosity % | PEG-200 Rejection Rate % |
|---|---|---|---|---|
| Example 1 | 30 | 80 | 65 | 80 |
| Example 2 | 30 | 70 | 60 | 85 |
| Example 3 | 30 | 60 | 50 | 94 |
| Example 4 | 30 | 80 | 55 | 88 |
| Example 5 | 25 | 70 | 65 | 85 |
| Example 6 | 45 | 60 | 40 | 90 |
| Example 7 | 30 | 65 | 55 | 88 |
| Example 8 | 28 | 60 | 58 | 93 |
| Example 9 | 26 | 54 | 56 | 95 |
| Example 10 | 24 | 50 | 52 | 97 |
| Example 11 | 20 | 54 | 56 | 92 |
| Example 12 | 30 | 66 | 60 | 86 |
| Example 13 | 30 | 60 | 50 | 90 |
| Comparative Example 1 | 40 | 80 | 55 | 72 |
| Comparative Example 2 | 40 | 75 | 52 | 74 |

As can be seen from Table 1, within a certain range, as the proportion of conductive material to thermosensitive material in the modifier solution increases, the average pore size and PEG-200 rejection rate of the composite nanofiltration membrane increase, while the porosity decreases, with no significant change in the functional layer thickness. When the proportion of conductive material to thermosensitive material is excessively high, the average pore size instead increases. The coating volume of the modifier solution affects the functional layer thickness, average pore size, and PEG-200 rejection rate-an appropriate coating volume is required, with 100 mL/min preferably selected (as seen in Examples 3, 5, and 6). Within a certain range, increasing the interfacial polymerization temperature enhances crosslinking degree, thereby achieving smaller pore size, higher organic rejection, and reduced desalination layer thickness. Compared with Comparative Examples 1 and 2, the nanofiltration membrane prepared via the thermosensitive modification process exhibits smaller pore size, higher organic rejection, and a thinner desalination layer.

### Test Example 2

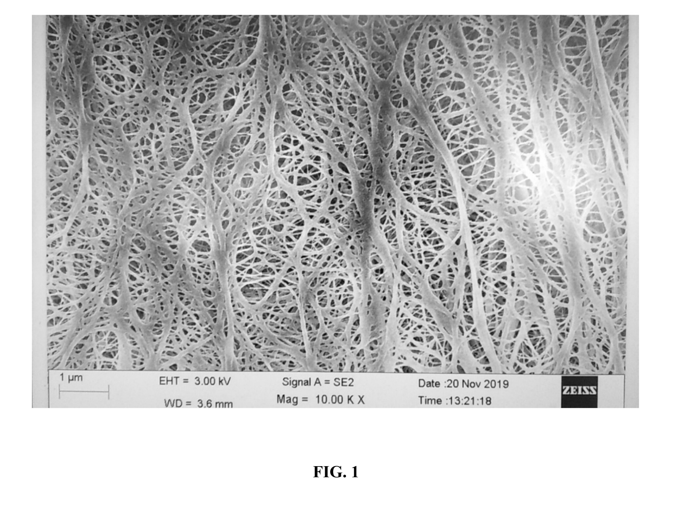

Scanning electron microscopy (SEM) was performed on the surface morphology of the polyethylene microporous membrane used in Example 3 (Jiangsu Housheng New Energy Technology Co., Ltd., 0.2 µm), and the resulting image is shown in Figure 1.

As can be seen from Figure 1, the surface of this polyethylene microporous membrane exhibits stretching crack-like pores, with a pore size distribution ranging from 50-200 nm and a bubble point pore size of approximately 50 nm. The relatively wide surface pore size distribution is primarily attributed to its forming process.

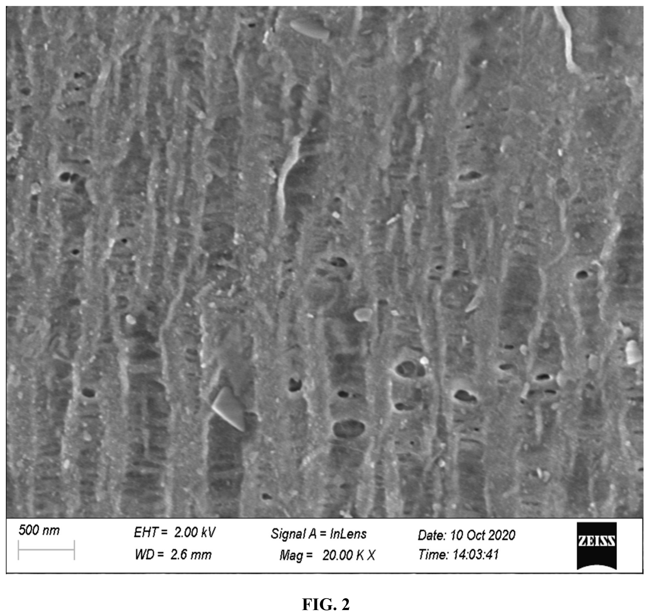

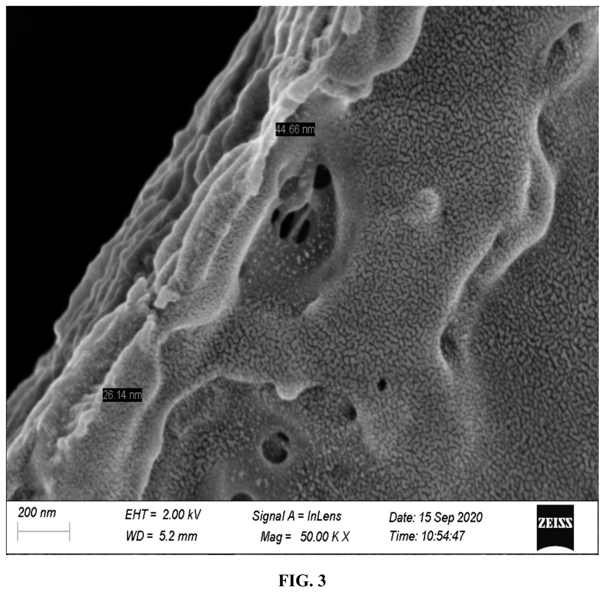

SEM was performed on the surface and cross-section of the nanofiltration membrane semi-finished product obtained in Example 3, and the corresponding images are shown in Figures 2 and 3.

As can be seen from Figures 2 and 3, the surface of this nanofiltration membrane semi-finished product is smooth, with significantly reduced membrane pores, and a distinct thermosensitive modification layer is observed in the cross-section.

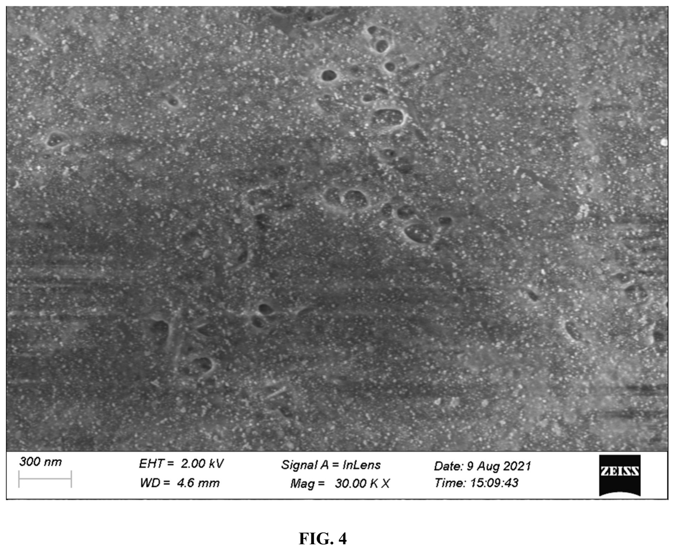

SEM was also performed on the surface of the nanofiltration membrane obtained in Example 3, and the image is shown in Figure 4.

As can be seen from Figure 4, the surface of this nanofiltration membrane exhibits a microvesicle-structured functional layer, which effectively increases the specific surface area.

### Test Example 3

Filtration performance tests were conducted on the nanofiltration membranes provided by Examples 1-13 and Comparative Examples 1-2, specifically evaluating the salt rejection rate and water flux for NaCl and MgSO₄ solutions. Using the prepared solutions as test liquids, the pH of the test liquids was adjusted to 7. A membrane cross-flow test apparatus was employed, with a cross-flow velocity of 3.5 L/min. After pre-pressurization for 30 min, the flux and salt rejection rate of the membrane samples were measured. Specifically, the NaCl solution had a concentration of 500 ppm, a temperature of 25°C, and a test pressure of 60 psi. The MgSO₄ solution had a concentration of 2000 ppm, a temperature of 25°C, and a test pressure of 70 psi.

The salt rejection rates and water flux values are shown in Table 2 below.

**Table 2: Salt Rejection Rate and Water Flux**

| | NaCl Salt Rejection Rate % | NaCl Water Flux LMH | MgSO4 Salt Rejection Rate % | MgSO4 Water Flux LMH |
|---|---|---|---|---|
| Example 1 | 35 | 90 | 96.5 | 75 |
| Example 2 | 40 | 85 | 97.2 | 70 |
| Example 3 | 45 | 80 | 98.5 | 65 |
| Example 4 | 30 | 95 | 96.4 | 80 |
| Example 5 | 35 | 80 | 96.6 | 68 |
| Example 6 | 40 | 70 | 99.1 | 55 |
| Example 7 | 30 | 80 | 96.2 | 82 |
| Example 8 | 30 | 80 | 96.5 | 70 |
| Example 9 | 50 | 75 | 97.1 | 65 |
| Example 10 | 70 | 70 | 98.2 | 60 |
| Example 11 | 50 | 75 | 97.4 | 65 |
| Example 12 | 35 | 90 | 97.3 | 70 |
| Example 13 | 40 | 75 | 97.2 | 65 |
| Comparative Example 1 | 30 | 85 | 95.7 | 60 |
| Comparative Example 2 | 35 | 80 | 96.6 | 60 |

As can be seen from Table 2, within a certain range, as the proportion of conductive material to thermosensitive material in the modifier solution increases, the NaCl and MgSO₄ rejection rates of the composite nanofiltration membrane increase, while the flux decreases. When the proportion of conductive material to thermosensitive material is excessively high, the rejection rates for both salts instead increase. The coating volume of the modifier solution affects the salt rejection and flux for NaCl and MgSO₄-an appropriate coating amount is required, with 100 mL/min preferably selected (as seen in Examples 3, 5, and 6). Within a certain range, increasing the interfacial polymerization temperature enhances the crosslinking degree, thereby improving the salt rejection for NaCl and MgSO₄. Compared with Comparative Examples 1 and 2, the nanofiltration membrane prepared via the thermosensitive modification process in Example 3 exhibits higher salt rejection and water flux.

### Test Example 4

Uniformity testing was conducted on the nanofiltration membranes provided by Example 3, Comparative Examples 1-2, and the polyethylene microporous membrane. Three positions (left, middle, and right) along the width direction of the nanofiltration membrane during preparation were sampled to test the salt rejection rate and water flux of NaCl and MgSO₄ solutions.

Using the prepared solutions as test liquids, the pH of the test liquids was adjusted to 7. A membrane cross-flow test apparatus was employed, with a cross-flow velocity of 3.5 L/min. After pre-pressurization for 30 min, the flux and salt rejection rate of the membrane samples were measured. Specifically, the NaCl solution had a concentration of 500 ppm, a temperature of 25°C, and a test pressure of 60 psi. The MgSO₄ solution had a concentration of 2000 ppm, a temperature of 25°C, and a test pressure of 70 psi.

The salt rejection rates and water flux values are shown in Table 3 below.

**Table 3: Salt Rejection Rate and Water Flux**

| | | Example 3 | Comparative Example 1 | Comparative Example2 | polyethylene microporous membrane |
|---|---|---|---|---|---|
| NaCl Salt Rejection Rate % | Left | 43 | 22 | 28 | 0 |
| | Middle | 45 | 35 | 37 | 0 |
| | Right | 46 | 18 | 26 | 0 |
| NaCl Water Flux LMH | Left | 81 | 90 | 75 | 312 |
| | Middle | 80 | 75 | 66 | 416 |
| | Right | 78 | 96 | 78 | 356 |
| MgSO4 Salt Rejection Rate % | Left | 98.4 | 94.2 | 96.2 | 0 |
| | Middle | 98.8 | 96.5 | 97.5 | 0 |
| | Right | 98.5 | 94.7 | 95.8 | 0 |
| MgSO4 Water Flux LMH | Left | 65 | 65 | 62 | 374 |
| | Middle | 63 | 52 | 54 | 465 |
| | Right | 66 | 63 | 63 | 412 |

As can be seen from Table 3, for the nanofiltration membranes prepared by Comparative Examples 1 and 2, although the flux and salt rejection uniformity for MgSO₄ and NaCl solutions improved after process optimization, the flux deviation still remained at ±7 LMH and the salt rejection deviation at ±1.0%-which compromised operational stability and durability. In contrast, the nanofiltration membrane of Example 3 (prepared via the novel thermosensitive modification process) exhibited flux deviations of only ±2 LMH and salt rejection deviations of ±0.2%, with uniformity effectively enhanced.

### Test Example 5

Stability testing was conducted on 1812 membrane elements fabricated from the nanofiltration membranes provided by Example 3 and Comparative Examples 1-2. Using the prepared solution as the test liquid, the pH of the test liquids was adjusted to 7. A cross-flow test apparatus was employed, with a cross-flow velocity of 3.5 L/min. After pre-pressurization for 30 min, long-term lifetime evaluation was performed. The MgSO₄ solution had a concentration of 2000 ppm, a temperature of 25°C, and a test pressure of 70 psi. Long-term operation was carried out at a 30% recovery rate, with acid-base cleaning (pH=2 and pH=12) performed once every 5 days. The MgSO₄ rejection rate and water flux (GPD) are shown in Table 4 below.

**Table 4: MgSO₄ Rejection Rate and Water Flux (GPD)**

| | Example 3 | | Comparative Example 1 | | Comparative Example2 | |
|---|---|---|---|---|---|---|
| | Water Flux GPD | MgSO4 Rejection Rate % | Water Flux GPD | MgSO4 Rejection Rate % | Water Flux GPD | MgSO4 Rejection Rate % |
| 0d | 175 | 99.0 | 160 | 95.2 | 150 | 96.8 |
| 10d | 170 | 98.9 | 145 | 94.2 | 140 | 96.1 |
| 20d | 168 | 98.7 | 136 | 93.6 | 136 | 95.2 |
| 30d | 168 | 98.5 | 128 | 92.8 | 132 | 93.1 |

As can be seen from Table 4, the nanofiltration membrane element prepared via Example 3 (using the novel thermosensitive modification process) exhibited no significant changes in water flux or salt rejection rate during continuous operation for 30 days. In contrast, after 30 days of continuous operation, the nanofiltration membrane elements from Comparative Examples 1 and 2 showed a salt rejection rate decrease of ≥2.0% and a water flux decrease of > 10%.

Finally, it should be noted that the above-described examples are merely specific embodiments of the present invention, intended to illustrate the technical solutions thereof rather than to limit it. The protection scope of the present invention is not confined thereto. Despite the detailed description of the present invention with reference to the foregoing embodiments, those skilled in the art should understand that: any person familiar with the technical field may modify the technical solutions described in the foregoing embodiments, make easily conceivable changes, or perform equivalent replacements on some of the technical features within the technical scope disclosed by the present invention. Such modifications, changes, or replacements do not deviate from the essence and scope of the technical solutions of the present invention's embodiments and shall all fall within the protection scope of the present invention. Therefore, the protection scope of the present invention shall be subject to the protection scope of the appended claims.

### Industrial Applicability

The present invention provides an application of a thermosensitive composite material in the preparation of a separation membrane, as well as a nanofiltration membrane and its preparation method. In the described use, the invention utilizes the thermosensitive material's characteristic of rapidly responding to temperature changes, which is transmitted to the outside via a conductive filler-enabling timely feedback and adjustment of temperature during separation membrane preparation. This facilitates the fabrication of isotropic separation membranes, ensures stable performance of the separation membranes, improves the quality of separation membrane products, and thus has excellent application value.

The present invention also provides a nanofiltration membrane, primarily composed of a porous support layer, a thermosensitive modification layer, and an interfacial polymerization layer. The thermosensitive modification layer not only provides good hydrophilicity to enhance the nanofiltration membrane's permeability but also "anchors" the porous support layer and interfacial polymerization layer together effectively-strengthening their binding force. This solves the problem of nanofiltration membranes being unable to withstand backflushing and prolongs their service life, demonstrating outstanding industrial applicability.

## Claims

1. An application of a thermoresponsive composite material in the preparation of separation membranes, wherein the thermoresponsive composite material comprises a thermoresponsive material and a conductive filler.

2. The application according to claim 1, **characterized in that** the mass ratio of the thermosensitive material to the conductive filler ranges from 10-30:1-10;
Optionally, the thermosensitive material comprises at least one of polylactic acid, poly(N-isopropylacrylamide), polystyrene, polyurethane, acrylonitrile-butadiene-styrene copolymer, polycarbonate, polycaprolactone, polyethylene oxide, and polyvinyl chloride;
Optionally, the conductive filler comprises at least one of polyacetylene and its derivatives, polypyrrole and its derivatives, polythiophene and its derivatives, poly(p-styrene) and its derivatives, and polyaniline and its derivatives;
Optionally, the particle size of the conductive filler is 5 nm-20 nm;
Optionally, the average particle size of the conductive filler is 5 nm-20 nm.

3. The application according to claim 1 or 2, **characterized in that** the separation membrane comprises microfiltration membranes, ultrafiltration membranes, nanofiltration membranes, reverse osmosis membranes, pervaporation membranes, or ion exchange membranes.

4. A nanofiltration membrane, **characterized in that** it comprises a porous support layer, a thermoresponsive modification layer, and an interfacial polymerization layer stacked sequentially;
wherein the thermoresponsive modification layer comprises a thermoresponsive composite material.

5. The nanofiltration membrane according to claim 4, wherein the thermoresponsive composite material comprises a thermoresponsive material and a conductive filler;
Optionally, the mass ratio of the thermoresponsive material to the conductive filler ranges from 10-30:1-10;
Optionally, the thermoresponsive material comprises at least one of polylactic acid, poly(N-isopropylacrylamide), polystyrene, polyurethane, acrylonitrile-butadiene-styrene copolymer, polycarbonate, polycaprolactone, polyethylene oxide, and polyvinyl chloride;
Optionally, the conductive filler comprises at least one of polyacetylene and its derivatives, polypyrrole and its derivatives, polythiophene and its derivatives, poly(p-styrene) and its derivatives, and polyaniline and its derivatives;
Optionally, the particle size of the conductive filler is 5 nm-20 nm;
Optionally, the average particle size of the conductive filler is 5 nm-20 nm.

6. The nanofiltration membrane according to claim 4 or 5, **characterized in that** the thickness of the porous support layer is 10 µm-80 µm, the average pore size is 10 nm-100 nm, and the porosity is 20%-70%.

7. The nanofiltration membrane according to claim 4 or 5, **characterized in that** the thickness of the porous support layer is 10 µm-50 µm, the average pore size is 10 nm-100 nm, and the porosity is 20%-70%;
Optionally, the thickness of the thermoresponsive modification layer is 1 µm-5 µm, the average pore size is 5 nm-50 nm, and the porosity is 10%-50%;
Optionally, the thickness of the interfacial polymerization layer is 10 nm-100 nm, the average pore size is 0.5 nm-2 nm, and the porosity is 10%-50%.

8. A preparation method for the nanofiltration membrane according to any one of claims 4-7, **characterized in that** the method comprises the following steps:
A. Preparing the thermoresponsive composite material into a slurry, coating it onto the porous support layer using a slot die quantitative coating process, and drying it in a first oven to obtain a nanofiltration membrane semi-finished product provided with the thermoresponsive modification layer on the porous support layer;
B. Coating an aqueous phase solution onto one side surface of the nanofiltration membrane semi-finished product, removing excess aqueous phase solution from the surface using a nitrogen air knife, then coating an oil phase solution onto the surface of the aqueous phase solution, and placing it into a second oven equipped with an infrared temperature probe; the infrared temperature probe is disposed on the thermoresponsive modification layer and used to measure the temperature of the surface of the thermoresponsive modification layer, and the nanofiltration membrane is obtained after drying.

9. The preparation method according to claim 8, **characterized in that** the infrared temperature probe is disposed at least at three points on the width direction of the thermoresponsive modification layer: left, middle, and right;
Optionally, in step B, the drying temperature is 30°C-90°C, and the drying time is 40s-120s.

10. The preparation method according to claim 8 or 9, **characterized in that** in step A, the slurry comprises the following components by mass percentage: thermosponsive composite material 11%-40%, additives 1%-8%, and the balance being solvent;
Optionally, the thermoresponsive composite material comprises a thermoresponsive material and a conductive filler;
Optionally, the mass ratio of the thermoresponsive material to the conductive filler ranges from 10-30:1-10.

11. The preparation method according to any one of claims 7-10, **characterized in that** in step A, the slurry comprises the following components by mass percentage: thermoresponsive material 10%-30%, conductive filler 1%-10%, additives 1%-3%, and the balance being solvent;
Optionally, the additives comprise at least one of ketones, alcohols, mixtures of polyvinyl alcohols with different molecular weights, and mixtures of polyvinylpyrrolidone with different molecular weights;
Optionally, the molecular weight of the ketones is 30-98;
Optionally, the ketones comprise at least one of n-propanone, isopropanone, acetone, butanone, and cyclohexanone;
Optionally, the molecular weight of the alcohols is 32-60;
Optionally, the alcohols comprise at least one of methanol, ethanol, isopropanol, and n-propanol;
Optionally, the solvent comprises at least one of dimethylformamide, dimethylacetamide, and dimethyl sulfoxide.

12. The preparation method according to claim 11, **characterized in that** in step A, the slurry is prepared by first uniformly dispersing the conductive filler in the solvent, then adding the thermoresponsive material and the additives, stirring to achieve uniform mixing, and thereby obtaining the slurry.

13. The preparation method according to any one of claims 7-12, **characterized in that** in step A, in the slot die quantitative coating process, the coating speed is 2 m/min-20 m/min, and the coating amount is 10 mL/min-500 mL/min;
Optionally, in step A, the drying temperature is 40°C-80°C.
